# EUROPÄISCHE PATENTANMELDUNG

(11) **EP 4 428 100 A1**
(43) Veröffentlichungstag der Anmeldung: **11.09.2024**
(21) Anmeldenummer: 23020117.0
(22) Anmeldetag: 10.03.2023
(51) Int. Cl.: C01C 1/04, C25B 1/04

(54) **VERFAHREN UND VORRICHTUNG ZUR SYNTHESE VON AMMONIAK**

(71) Anmelder: Linde GmbH, 82049 Pullach (DE)
(72) Erfinder: Schwarzhuber, Josef, 82049 Pullach (DE); Maier, Alexander, 82049 Pullach (DE); Dillig, Marius, 82049 Pullach (DE)
(74) Vertreter: Fischer, Werner

(57) **Zusammenfassung**

Die Erfindung betrifft ein Verfahren sowie eine Vorrichtung zur Synthese von Ammoniak (14), bei dem in einem Synthesekreislauf ein Wasserstoff und Stickstoff umfassendes, Ammoniaksynthesegas (1) unter Zufuhr von Make-up-Wasserstoff gebildet und einem Ammoniakreaktor (A) zugeleitet wird, um es mit katalytischer Unterstützung zu einem Ammoniak, Wasserstoff und Stickstoff enthaltenden Syntheseprodukt (2) umzusetzen, das in eine ammoniakreiche Flüssigphase (5) und eine weitgehend aus Wasserstoff und Stickstoff bestehende Gasphase (6) getrennt wird, von der zumindest ein Teil zur Bildung des Ammoniaksynthesegases (1) über den Synthesekreislauf vor den Ammoniakreaktor (A) zurückgeführt wird, wobei eine wasserhaltige, durch elektrochemische Zerlegung von Wasser erzeugte Wasserstofffraktion (Elektrolysewasserstoff) (9) dazu bereitgestellt wird, um den Make-up-Wasserstoff zu erhalten. Kennzeichnend hierbei ist, dass der Elektrolysewasserstoff (9) oder eine aus dem Elektrolysewasserstoff (9) durch Reduzierung von freiem Sauerstoff freiem Sauerstoff (O) erhaltene Wasserstofffraktion (10) mit zumindest einem Teil (15) der ammoniakreiche Flüssigphase (5) in Kontakt gebracht wird, um Wasser abzutrennen und den wasserfreien Make-up-Wasserstoff (16) zu erhalten.

## Beschreibung

Die Erfindung betrifft ein Verfahren zur Synthese von Ammoniak, bei dem in einem Synthesekreislauf ein Wasserstoff und Stickstoff umfassendes Ammoniaksynthesegas unter Zufuhr von wasserfreiem Make-up-Wasserstoff gebildet und einem Ammoniakreaktor zugeleitet wird, um es mit katalytischer Unterstützung zu einem Ammoniak, Wasserstoff und Stickstoff enthaltenden Syntheseprodukt umzusetzen, das in eine ammoniakreiche Flüssigphase und eine weitgehend aus Wasserstoff und Stickstoff bestehende Gasphase getrennt wird, von der zumindest ein Teil zur Bildung des Ammoniaksynthesegases über den Synthesekreislauf vor den Ammoniakreaktor zurückgeführt wird, wobei eine wasserhaltige, durch elektrochemische Zerlegung von Wasser erzeugte Wasserstofffraktion (Elektrolysewasserstoff) dazu bereitgestellt wird, um den wasserfreien Make-up-Wasserstoff zu erhalten.

Weiterhin betrifft die Erfindung eine Vorrichtung zur Durchführung des erfindungsgemäßen Verfahrens.

Ammoniak ist eine der weltweit meistproduzierten Chemikalien. Es dient in erster Linie als Grundstoff zur Herstellung von Düngemitteln, gewinnt daneben aber auch zunehmend als Energieträger und Wasserstoffspeicher an Bedeutung. In industriellem Maßstab wird es praktisch ausschließlich nach dem Haber-Bosch-Verfahren aus Stickstoff und Wasserstoff synthetisiert.

Beim Haber-Bosch-Verfahren wird ein vorwiegend aus Wasserstoff und Stickstoff bestehendes Ammoniaksynthesegas, in dem die beiden Stoffe in dem für die Synthese von Ammoniak stöchiometrischen Verhältnis von 3:1 vorliegen, mit einem Druck zwischen 80 und 300 bar und einer Temperatur zwischen 150 und 250°C einem Ammoniakreaktor zugeführt, um mit katalytischer Unterstützung in einer exothermen Reaktion unter Bildung von Ammoniak umgesetzt zu werden. Aufgrund thermodynamischer Limitierungen erfolgt die Umsetzung allerdings nur unvollständig, so dass ein Syntheseprodukt entsteht, das neben Ammoniak auch erhebliche Wasserstoff- und Stickstoffanteile enthält. Mit einer Temperatur zwischen 400 und 450°C verlässt das Syntheseprodukt den Ammoniakreaktor und wird nachfolgend in einer Reihe von Wärmetauschern üblicherweise auf Temperaturen zwischen -20 und 0°C abgekühlt, um Ammoniak durch Kondensation abzuscheiden und ein zweiphasiges Stoffgemisch zu erhalten, das in einer nachfolgenden Trenneinrichtung in ein wenigstens ein weitgehend aus Wasserstoff und Stickstoff bestehendes, Reste nicht auskondensierten Ammoniaks enthaltendes Gasgemisch sowie eine überwiegend aus Ammoniak bestehende Flüssigphase getrennt wird. Während das Gasgemisch zur Erhöhung der Ammoniakausbeute ganz oder teilweise als Recyclegas zum Ammoniakreaktor zurückgeführt und in dem so etablierten Synthesekreislauf mit den Make-up-Gasen Wasserstoff und Stickstoff zum Ammoniaksynthesegas ergänzt wird, wird die überwiegend aus Ammoniak bestehende Flüssigphase üblicherweise weiter aufgereinigt, zur Vermeidung von Spannungskorrosion mit einer geringen Menge Wasser angereichert und als Ammoniakprodukt bei Atmosphärendruck und einer Temperatur von -33°C in Stahlbehältern gelagert.

Gewöhnlich umfasst die Trenneinrichtung einen Hochdruckphasentrenner, der bei einem Druck betrieben wird, der im Wesentlichen dem Druck im Ammoniakreaktor entspricht, sowie einen Mitteldruckabscheider, in den die im Hochdruckphasentrenner erhaltene ammoniakreiche Flüssigphase auf einen Druck entspannt wird, der etwa so hoch ist wie der Druck der Make-up-Gase (beispielsweise 30bar), um die weitgehend aus Ammoniak bestehende Flüssigphase zu gewinnen, die zur Abtrennung von verbliebenen Verunreinigungen weiter gekühlt und entspannt wird, um Ammoniak zu erhalten, das nach evtl. Zumischung einer geringen Wassermenge als Produkt abgegeben wird oder gespeichert wird.

Zur Gewinnung des wasserfreien Make-up-Wasserstoffs wird nach dem Stand der Technik ein kohlenwasserstoffhaltiger Einsatz, bei dem es sich etwa um Erdgas handelt, ggf. entschwefelt und anschließend beispielsweise durch Dampfreformierung, Partielle Oxidation oder Autothermalreformierung zu einem Syntheserohgas umgesetzt, das großenteils aus Wasserstoff, Kohlenmonoxid sowie Kohlendioxid besteht und daneben auch Wasser enthält. Anschließend wird das Syntheserohgas einer Wassergas-Konvertierung unterzogen, um das enthaltene Kohlenmonoxid mit Wasser zu Wasserstoff und Kohlendioxid zu konvertieren. U.a. durch Sauergaswäsche wird Kohlendioxid aus dem konvertierten Gas abgetrennt, wobei eine als Rohwasserstoff bezeichnete Wasserstofffraktion erhalten wird, die neben Wasserstoff auch Reste von Kohlenmonoxid und Kohlendioxid sowie Wasser umfasst.

Damit Kohlenmonoxid, Kohlendioxid und Wasser nicht in den Ammoniakreaktor gelangen und das dort eingesetzte, gegenüber Sauerstoffverbindungen und freiem Sauerstoff empfindliche Katalysatormaterial vergiften, ist es erforderlich, den Make-up-Wasserstoff sauerstofffrei zu erzeugen, d.h. die atomare Sauerstoffkonzentration auf weniger als 10 ppmv zu reduzieren. Der Rohwasserstoff wird hierzu beispielsweise durch Methanisierung, Stickstoffwäsche oder Druckwechseladsorption weiterbehandelt, wobei Kohlenmonoxid, Kohlendioxid und freier Sauerstoff umgewandelt oder zusammen mit evtl. vorliegendem Wasser abgetrennt werden.

Nicht zuletzt wegen der großen Mengen an klimaschädlichem Kohlendioxid, die bei dieser Art der Wasserstoffproduktion anfallen, werden verstärkt Anstrengungen unternommen, den für die Ammoniaksynthese benötigten Wasserstoff kohlendioxidarm bzw. kohlendioxidfrei zu gewinnen. Möglich ist dies etwa durch die elektrochemische Zerlegung von Wasser unter Einsatz von Strom aus regenerativen Quellen.

Bei der elektrochemischen Zerlegung von Wasser wird eine als Elektrolysewasserstoff bezeichnete Gasfraktion gewonnen, die zwar kein Kohlenmonoxid enthält, die jedoch gewöhnlich mit Wasser gesättigt ist. Außerdem enthält Elektrolysewasserstoff auch bis zu 1000ppmv freien Sauerstoff, so dass er nicht direkt als Make-up-Wasserstoff verwendet werden kann. Um aus Elektrolysewasserstoff einen zur Bildung von Ammoniaksynthesegas geeigneten Make-up-Wasserstoff zu erhalten, wird ggf. sein Gehalt an freiem Sauerstoff durch Abtrennung von Sauerstoff und/oder Umwandlung von Sauerstoff zu Wasser reduziert, ehe er beispielsweise durch Druck- oder Temperaturwechseladsorption mit hohem apparativem und energetischem Aufwand von Wasser befreit wird.

Die vorliegende Erfindung stellt sich die Aufgabe, ein Verfahren der gattungsgemäßen Art sowie eine Vorrichtung zu dessen Durchführung anzugeben, die es erlauben, den Aufwand für die Synthese von Ammoniak gegenüber dem Stand der Technik zu vermindern.

Die gestellte Aufgabe wird verfahrensseitig erfindungsgemäß dadurch gelöst, dass der Elektrolysewasserstoff oder eine aus dem Elektrolysewasserstoff durch Reduzierung von freiem Sauerstoff erhaltene Wasserstofffraktion mit zumindest einem Teil der ammoniakreichen Flüssigphase in Kontakt gebracht wird, um Wasser abzutrennen und den wasserfreien Make-up-Wasserstoff zu erhalten.

Bei der Reduzierung des freien Sauerstoffs wird freier Sauerstoff aus dem Elektrolysewasserstoff abgetrennt und/oder durch Reaktion mit Wasserstoff zu Wasser umgewandelt, so dass die Wasserstofffraktion mit einer atomaren Sauerstoffkonzentration von weniger als 5ppmv erhalten wird. Auf die Reduzierung des freien Sauerstoffs kann verzichtet werden, wenn der Elektrolysewasserstoff bereits mit einem Gehalt an freiem Sauerstoff von weniger als 5ppmv vorliegt.

Die Erfindung macht sich die hygroskopischen Eigenschaften von flüssigem Ammoniak zunutze, dass das im Elektrolysewasserstoff bzw. in der aus Elektrolysewasserstoff durch Reduzierung von freiem Sauerstoff erhaltenen Wasserstofffraktion enthaltene Wasser bindet. Im Unterschied zum Wasserstoff des Elektrolysewasserstoffs bzw. der Wasserstofffraktion gelangt das Wasser daher nicht oder nur in einer für das eingesetzte Katalysatormaterial unkritischen Menge über den Synthesekreislauf in den Ammoniakreaktor. Auf eine Abtrennung von Wasser aus dem Elektrolysewasserstoff stromaufwärts des Synthesekreislaufs, wie sie im Stand der Technik notwendig ist, kann daher ganz oder zumindest weitgehend verzichtet werden.

Bei dem erfindungsgemäßen Verfahren wird ein Ammoniakprodukt erhalten, das einen geringen Wassergehalt aufweist, der u.U. bereits ausreichend hoch ist, um es ohne Korrosionsprobleme bei Atmosphärendruck in Stahlbehältern lagern zu können. Eine Zumischung von Wasser ist daher nicht oder nur in einem gegenüber dem Stand der Technik deutlich reduzierten Ausmaß erforderlich.

Das erfindungsgemäße Verfahren weiterbildend wird vorgeschlagen, den Elektrolysewasserstoff oder die aus Elektrolysewasserstoff durch Reduzierung von freiem Sauerstoff erhaltene Wasserstofffraktion über eine Zuführeinrichtung (Sparger) in eine Blasensäule einzuleiten, in deren Sumpf die ammoniakreiche Flüssigphase vorliegt. Die Gasphase tritt vorteilhafterweise über nach unten gerichtete Öffnungen in die ammoniakreiche Flüssigphase aus, in der sie in eine Vielzahl von Gasblasen verteilt nach oben steigt. Die Gasblasen bilden eine große Phasengrenzfläche aus, die dafür sorgt, dass in der Gasphase enthaltenes Wasser sich rasch an das Ammoniak der Flüssigphase anlagert und effektiv bis auf Gehalte unter 10ppmv entfernt wird. Die sich im Gasraum der Blasensäule sammelnde, weitgehend aus Wasserstoff bestehende Gasphase wird aufgrund ihres geringen, vorzugsweise unterhalb von 10ppmv liegenden Wasser- bzw. Sauerstoffgehalts bevorzugt ohne einen weiteren Aufbereitungsschritt als wasserfreier Make-up-Wasserstoff dem Synthesekreislauf zur Bildung des Ammoniaksynthesegases zugeführt.

Zweckmäßigerweise wird die Blasensäule bei einem Druck betrieben, der bis auf Leitungsverluste dem Druck des Elektrolysewasserstoffs bzw. der aus Elektrolysewasserstoff durch Reduzierung von freiem Sauerstoff erhaltenen Wasserstofffraktion entspricht (typischerweise ca. 30bar). Gleichzeitig wird die Blasensäule als Mitteldruckabscheider genutzt, in den ein aus dem abgekühlten Syntheseprodukt in einem Hochdruckabscheider bei einem höheren Druck abgetrenntes ammoniakreiches Kondensat entspannt wird. Vorzugsweise wird das ammoniakreiche Kondensat im Hochdruckabscheider aus dem abgekühlten Syntheseprodukt bei einem Druck abgetrennt, der bis auf Leitungsverluste dem Druck bei der Ammoniaksynthese entspricht.

Der Elektrolysewasserstoff oder die aus Elektrolysewasserstoff durch Reduzierung von freiem Sauerstoff erhaltene Wasserstofffraktion kann auch in einer Waschkolonne behandelt werden, wobei er bzw. sie im Gegenstrom zu einer ammoniakreichen, am Kopf der Waschkolonne aufgegebenen Flüssigphase geführt und durch diese gewaschen wird. Die weitgehend aus Wasserstoff bestehende, vom Kopf der Waschkolonne abziehbare Gasphase wird aufgrund ihres geringen, vorzugsweise unterhalb von 10ppmv liegenden Wassergehalts bevorzugt ohne einen weiteren Aufbereitungsschritt als wasserfreier Make-up-Wasserstoff dem Synthesekreislauf zur Bildung des Ammoniaksynthesegases zugeführt.

Zweckmäßigerweise wird die Waschkolonne bei einem Druck betrieben, der bis auf Leitungsverluste dem Druck des Elektrolysewasserstoffs bzw. der aus Elektrolysewasserstoff durch Reduzierung von freiem Sauerstoff erhaltenen Wasserstofffraktion entspricht (typischerweise ca. 30bar). Vorzugsweise wird das abgekühlte Syntheseprodukt in einem Hochdruckphasentrenner und einem nachgeschalteten Mitteldruckabscheider getrennt und die im Mitteldruckabscheider erhaltene, ammoniakreiche Flüssigphase dem Kopf der Waschkolonne als Waschmittel zugeführt.

Das erfindungsgemäße Verfahren kann vorteilhaft dann eingesetzt werden, wenn der Elektrolysewasserstoff bzw. die aus Elektrolysewasserstoff durch Reduzierung von freiem Sauerstoff erhaltene Wasserstofffraktion mit einem hohen Wassergehalt vorliegt. Insbesondere kann der Elektrolysewasserstoff oder die aus Elektrolysewasserstoff durch Reduzierung von freiem Sauerstoff erhaltene Wasserstofffraktion mit Wasser gesättigt sein.

Zur Aufrechterhaltung der Ammoniaksynthese ist nötig, auch den über das flüssige Ammoniak aus dem Synthesekreislauf ausgetragenen Stickstoff durch Make-Up-Stickstoff zu ersetzen. Eine bevorzugte Ausgestaltung des erfindungsgemäßen Verfahrens sieht vor, dass zumindest ein Teil des als Make-up-Gas benötigten Stickstoffs gemeinsam mit dem Elektrolysewasserstoff bzw. der aus Elektrolysewasserstoff durch Reduzierung von freiem Sauerstoff erhaltenen Wasserstofffraktion dem abzukühlenden Syntheseprodukt zugemischt wird. Dies ist besonders dann vorteilhaft, wenn zur Bildung des Make-up-Stickstoffs wasserhaltiger Stickstoff zur Verfügung steht, wie er beispielsweise anfällt, wenn eine durch Druckwechseladsorption aus Luft abgetrennte Stickstofffraktion zur Entfernung von freiem Sauerstoff einer katalytischen Deoxidation unterzogen wird, bei der freier Sauerstoff zu Wasser reagiert.

Daneben soll es aber nicht ausgeschlossen sein, den Make-up-Stickstoff teilweise oder vollständig dem im Synthesekreislauf zurückgeführten Teil der weitgehend aus Wasserstoff und Stickstoff bestehende Gasphase oder dem Make-up-Wasserstoff zuzumischen.

Weiterhin betrifft die Erfindung eine Vorrichtung zur Synthese von Ammoniak, mit einem Ammoniakreaktor, der in einen Synthesekreislauf eingebunden ist, in dem unter Zuführung von Make-up-Wasserstoff ein Wasserstoff und Stickstoff umfassendes, Ammoniaksynthesegas gebildet und dem Ammoniakreaktor zugeleitet werden kann, um mit katalytischer Unterstützung zu einem Ammoniak, Wasserstoff und Stickstoff enthaltenden Syntheseprodukt umgesetzt zu werden, einer Kühleinrichtung, die mit einer Trenneinrichtung verbunden ist, so dass das Syntheseprodukt abgekühlt und in eine ammoniakreiche Flüssigphase und eine weitgehend aus Wasserstoff und Stickstoff bestehende Gasphase getrennt werden kann, von der zumindest ein Teil im Synthesekreislauf vor den Ammoniakreaktor zurückführbar ist, sowie einer mit dem Synthesekreiskauf verbundenen Wasserstoffquelle, die einen Elektrolyseur umfasst, mit dem durch elektrochemische Zerlegung von Wasser eine wasserhaltige Wasserstofffraktion (Elektrolysewasserstoff) zum Erhalt des Make-up-Wasserstoffs bereitstellbar ist.

Vorrichtungsseitig wird die gestellte Aufgabe erfindungsgemäß dadurch gelöst, dass sie einen mit der Wasserstoffquelle und dem Synthesekreislauf verbundenen Kontaktapparat umfasst, dem Elektrolysewasserstoff oder eine aus Elektrolysewasserstoff durch Reduzierung von freiem Sauerstoff erhältliche Wasserstofffraktion zuführbar ist, um zur Abtrennung von Wasser mit zumindest einem Teil der ammoniakreichen Flüssigphase in Kontakt gebracht zu werden und den wasserfreien Make-up-Wasserstoff zu erhalten.

In einer bevorzugten Ausgestaltung der erfindungsgemäßen Vorrichtung ist der Kontaktapparat als Blasensäule ausgeführt, die eine Zuführeinrichtung (Sparger) aufweist, über die der Elektrolysewasserstoff bzw. die aus Elektrolysewasserstoff durch Reduzierung von freiem Sauerstoff erhältliche Wasserstofffraktion, aufgeteilt in eine Vielzahl von Gasblasen, in die im Sumpf der Blasensäule vorliegende ammoniakreiche Flüssigphase eingeleitet werden kann. Sinnvollerweise ist die Blasensäule gleichzeitig als Mitteldruckabscheider ausgeführt und als Teil der Trenneinrichtung mit einem Hochdruckphasentrenner verbunden, mit dem aus dem abgekühlten Syntheseprodukt ein ammoniakreiches Kondensat abtrennbar ist, das anschließend in die Blasensäule entspannt werden kann. Vorzugsweise ist der Hochdruckphasentrenner bei einem Druck betreibbar, der bis auf Leitungsverluste dem Betriebsdruck des Ammoniakreaktors entspricht.

Der Kontaktapparat kann auch als Waschkolonne ausgeführt sein, der kopfseitig ammoniakreiche Flüssigphase aus dem Hochdruckphasentrenner als Waschmittel zuführbar ist. Die Waschkolonne kann mit Stoffaustauschböden und/oder zumindest einer strukturierten Packung ausgestattet sein, über die der Elektrolysewasserstoff bzw. die aus Elektrolysewasserstoff durch Reduzierung von freiem Sauerstoff erhältliche Wasserstofffraktion im Gegenstrom zum Waschmittel führbar ist.

Der Kontaktapparat ist über eine Zuführungseinrichtung so mit dem Synthesekreislauf verbunden, dass die durch den Kontakt mit der ammoniakreichen Flüssigphase erhaltene Gasphase als wasserfreies Make-up-Wasserstoff zur Bildung des Ammoniaksynthesegases genutzt werden kann.

Zweckmäßigerweise ist die Zuführeinrichtung mit einer Mischeinrichtung verbunden, mit der dem Make-up-Wasserstoff zumindest ein Teil des im Synthesekreislauf benötigten Make-up-Stickstoffs zumischbar ist.

Die Wasserstoffquelle kann beispielsweise einen Sauren oder PEM-Elektrolyseur oder einen Alkalischen Elektrolyseur oder einen Festoxid-Elektrolyseur umfassen. Da derartige Elektrolyseure den Elektrolysewasserstoff mit einer für Make-up-Wasserstoff zu hohen Sauerstoffkonzentration erzeugen, weist die Wasserstoffquelle insbesondere in diesen Fällen eine Sauerstoffreduzierung auf, mit der der Gehalt des Elektrolysewasserstoffs an freiem Sauerstoff durch Abtrennung von Sauerstoff und/oder Umwandlung von Sauerstoff zu Wasser bis unter 5ppmv reduziert werden kann. Bei der Sauerstoffreduktion handelt es sich etwa um eine katalytische Deoxidation, mit der freier Sauerstoff über einem Katalysatorbett mit Wasserstoff zu Wasser umwandelbar ist.

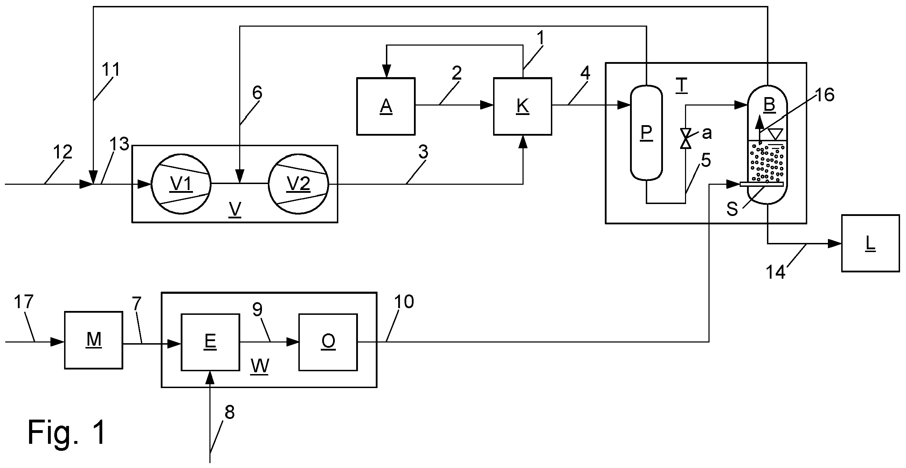

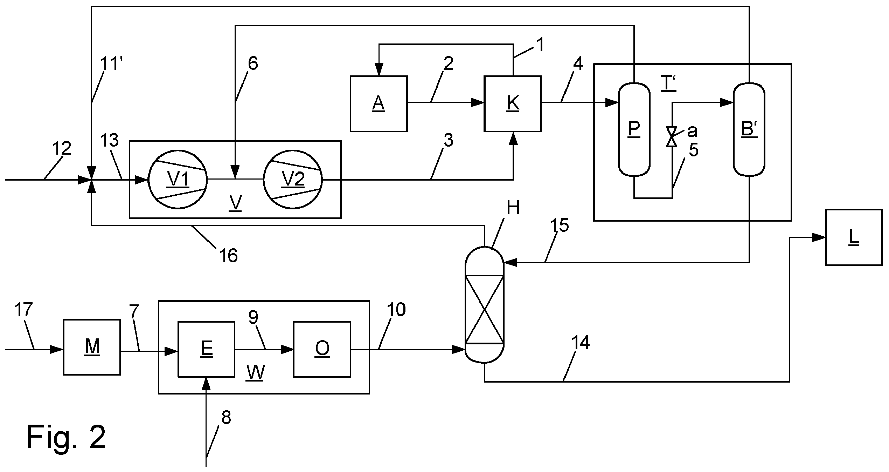

Im Folgenden soll die Erfindung anhand der in der Figuren 1 und 2 schematisch dargestellten Ausführungsbeispiele näher erläutert werden. Gleiche Komponenten sind in den beiden Figuren mit gleichen Bezugszeichen markiert.

Die Figuren 1 und 2 zeigen Ammoniaksynthesen, die gemäß bevorzugter Varianten des erfindungsgemäßen Verfahrens betrieben werden.

Das in einem Synthesekreislauf erzeugte Ammoniaksynthesegas 1, in dem Wasserstoff und Stickstoff in dem für die Synthese von Ammoniak stöchiometrischen Verhältnis von 3:1 vorliegen, wird wasserfrei und mit einer Temperatur zwischen 150 und 250°C dem Ammoniakreaktor A zugeführt, wo es mit katalytischer Unterstützung in einer exothermen Reaktion bei einem Druck zwischen 80 und 300bar unter Bildung von Ammoniak zum Syntheseprodukt 2 umgesetzt wird, das neben Ammoniak auch erhebliche Wasserstoff- und Stickstoffanteile enthält. Dem Syntheseprodukt 2, das den Ammoniakreaktor A mit einer Temperatur zwischen 400 und 480°C verlässt, wird in der Kühleinrichtung K u.a. gegen anzuwärmendes Ammoniaksynthesegas 3 auf eine Temperatur zwischen -20 und 0°C abgekühlt, wobei Ammoniak auskondensiert und ein zweiphasiges Stoffgemisch 4 entsteht, das in die Trenneinrichtung T weitergeleitet wird. Hier wird das zweiphasige Stoffgemisch 4 im Hochdruckphasentrenner P in eine erste ammoniakreiche Flüssigphase 5 und eine erste weitgehend aus Wasserstoff und Stickstoff bestehende Gasphase 6 getrennt. Während die erste Gasphase 6 als Hochdruckrecyclegas der Hochdruckstufe V2 des Kreislaufverdichters V aufgegeben wird, wird die erste ammoniakreiche Flüssigphase 5 zur Abtrennung gelöster Gase über das Drosselorgan a in den bei einem Druck von beispielsweise 30bar betriebenen, als Blasensäule ausgeführten Mitteldruckabscheider B entspannt, wobei insbesondere gelöster Wasserstoff und Stickstoff in die Gasphase übergehen und eine zweite ammoniakreiche Flüssigphase entsteht, die sich im Sumpfraum der Blasensäule sammelt.

Der mit der zweiten ammoniakreichen Flüssigphase aus dem Synthesekreislauf ausgetragene Wasserstoff wird durch wasserfreien Make-up-Wasserstoff ersetzt, zu dessen Erzeugung der Wasseraufbereitung M über Leitung 17 Wasser zugeführt wird, um zu demineralisiertem Wasser 7 aufbereitet und in den in der Wasserstoffquelle W angeordneten Elektrolyseur E weitergeleitet zu werden. Hier wird das demineralisierte Wasser 7 mit Hilfe von elektrischem Strom 8, der vorzugsweise aus einer regenerativen Stromquelle zugeführt wird, zerlegt, wobei Elektrolysewasserstoff 9 entsteht, der typischerweise mit Wasser gesättigt ist und gewöhnlich bis zu 1000ppmv freien Sauerstoff enthält. In der Sauerstoffreduzierung O, bei der es sich etwa um eine katalytische Deoxidation handelt, wird der Gehalt des Elektrolysewasserstoffs 9 an freiem Sauerstoff auf einen Wert unterhalb von 5ppmv reduziert, wodurch eine mit Wasser gesättigte Wasserstofffraktion 10 entsteht, die zur Abtrennung des für das im Ammoniakreaktor A eingesetzte Katalysatormaterial schädlichen Wassers über den Sparger S in die zweite ammoniakreiche Flüssigphase im Sumpfraum der als Kontaktapparat wirkenden Blasensäule B eingebracht wird, in der sie in eine Vielzahl von Gasblasen verteilt nach oben steigt. Aufgrund der hygroskopischen Eigenschaften des flüssigen Ammoniaks wird Wasser von der Wasserstofffraktion 10 abgetrennt, so dass eine wasserfreie Wasserstofffraktion in den Gasraum der Blasensäule B eintritt, aus dem sie als wasserfreier Make-up-Wasserstoff 16 gemeinsam mit den aus der ammoniakreichen Flüssigfraktion 5 freigesetzten Gasen als Mitteldruckrecyclegas 11 abgezogen wird. Nach Zumischung von Make-up-Stickstoff 12 wird das Mitteldruckrecyclegas 11 über Leitung 13 der Eingangsstufe V1 des Kreislaufverdichters V zugeführt, um verdichtet und mit dem Hochdruckrecyclegas 6 zum Ammoniaksynthesegas 3 gemischt zu werden. Die aus dem Sumpf der Blasensäule B abgezogene, mit Wasser beladene ammoniakreiche Flüssigphase 14 kann mit nur geringer oder ohne Wasserzumischung in dem aus Stahl gefertigten Lagerbehälter L als Ammoniakprodukt gespeichert werden, ohne Korrosionsprobleme zu verursachen.

In der Trenneinrichtung T' des Ausführungsbeispiels der Figur 2 wird die im Hochruckphasentrenner P erhaltene erste ammoniakreiche Flüssigphase 5 über das Drosselelement a in den nicht als Blasensäule ausgeführten, bei einem Druck von beispielsweise 30bar betriebenen Mitteldruckabscheider B' entspannt, wobei insbesondere gelöster Wasserstoff und Stickstoff in die Gasphase übergehen, die als Mitteldruckrecyclegas 7' vor die Eintrittsstufe V1 des Kreislaufverdichters V geführt wird. Die zweite ammoniakreiche Flüssigphase 15 aus dem Sumpf des Mitteldruckabscheiders B' wird als Waschmittel am Kopf der als Kontaktapparat wirkenden Waschsäule H aufgegeben, in deren unteren Bereich die aus dem Elektrolysewasserstoff 9 durch Reduzierung von freiem Sauerstoff gebildete, mit Wasser gesättigte Wasserstofffraktion 10 eingeleitet wird.

In der Waschkolonne H, die mit Stoffaustauschböden und/oder zumindest einer strukturierten Packung ausgeführt ist, wird die mit Wasser gesättigte Wasserstofffraktion 10 nach oben geleitet und dabei in intensiven Kontakt mit der im Gegenstrom geführten zweiten ammoniakreichen Flüssigphase 15 gebracht. Aufgrund der hygroskopischen Eigenschaften des Ammoniaks wird Wasser von der Wasserstofffraktion 10 abgetrennt, so dass eine wasserfreie Wasserstofffraktion als Make-up-Wasserstoff 16 vom Kopf der Waschkolonne H abgezogen und zusammen mit Make-up-Stickstoff 12 und dem Mitteldruckrecyclegas 11' über Leitung 13 der Eingangsstufe V1 des Kreislaufverdichters V zugeführt werden kann. Im Sumpf der Waschkolonne H sammelt sich eine mit Wasser beladene ammoniakreiche Flüssigphase, die wegen ihres geringen Wassergehalts nach geringer oder ohne Zumischung von weiterem Wasser als Ammoniakprodukt 14 in den Lagerbehälter L eingeleitet werden kann, ohne Korrosionsprobleme zu verursachen.

## Patentansprüche

1. Verfahren zur Synthese von Ammoniak (14), bei dem in einem Synthesekreislauf ein Wasserstoff und Stickstoff umfassendes, Ammoniaksynthesegas (1) unter Zufuhr von Make-up-Wasserstoff gebildet und einem Ammoniakreaktor (A) zugeleitet wird, um es mit katalytischer Unterstützung zu einem Ammoniak, Wasserstoff und Stickstoff enthaltenden Syntheseprodukt (2) umzusetzen, das in eine ammoniakreiche Flüssigphase (5) und eine weitgehend aus Wasserstoff und Stickstoff bestehende Gasphase (6) getrennt wird, von der zumindest ein Teil zur Bildung des Ammoniaksynthesegases (1) über den Synthesekreislauf vor den Ammoniakreaktor (A) zurückgeführt wird, wobei eine wasserhaltige, durch elektrochemische Zerlegung von Wasser erzeugte Wasserstofffraktion (Elektrolysewasserstoff) (9) dazu bereitgestellt wird, um den Make-up-Wasserstoff zu erhalten, **dadurch gekennzeichnet, dass** der Elektrolysewasserstoff (9) oder eine aus dem Elektrolysewasserstoff (9) durch Reduzierung von freiem Sauerstoff (O) erhaltene Wasserstofffraktion (10) mit zumindest einem Teil (15) der ammoniakreiche Flüssigphase (5) in Kontakt gebracht wird, um Wasser abzutrennen und den wasserfreien Make-up-Wasserstoff (16) zu erhalten.

2. Verfahren nach Anspruch 1, **dadurch gekennzeichnet, dass** der Elektrolysewasserstoff (9) oder die aus dem Elektrolysewasserstoff (9) durch Reduzierung von freiem Sauerstoff freiem Sauerstoff (O) erhaltene Wasserstofffraktion (10) in einer Blasensäule (B) oder einer Waschkolonne (H) mit zumindest einem Teil des ammoniakreichen Kondensats (5) in Kontakt gebracht wird.

3. Verfahren nach einem der Ansprüche 1 oder 2, dass der Elektrolysewasserstoff (9) oder die aus dem Elektrolysewasserstoff (9) durch Reduzierung von freiem Sauerstoff freiem Sauerstoff (O) erhaltene Wasserstofffraktion (10) mit Wasser gesättigt ist.

4. Verfahren nach einem der Ansprüche 1 bis 3, **dadurch gekennzeichnet, dass** der Make-up-Wasserstoff (16) nach Zumischung von Stickstoff (12) zur Bildung des Ammoniaksynthesegases (1) eingesetzt wird.

5. Vorrichtung zur Synthese von Ammoniak (14), mit einem Ammoniakreaktor (A), der in einen Synthesekreislauf eingebunden ist, in dem unter Zuführung von Make-up-Wasserstoff (16) ein Wasserstoff und Stickstoff umfassendes, Ammoniaksynthesegas (1) gebildet und dem Ammoniakreaktor (A) zugeführt werden kann, um mit katalytischer Unterstützung zu einem Ammoniak, Wasserstoff und Stickstoff enthaltenden Syntheseprodukt (2) umgesetzt zu werden, einer Kühleinrichtung (K), die mit einer Trenneinrichtung (T') verbunden ist, so dass das Syntheseprodukt (4) abgekühlt und in eine ammoniakreiche Flüssigphase (5) und eine weitgehend aus Wasserstoff und Stickstoff bestehende Gasphase (6) getrennt werden kann, von der zumindest ein Teil im Synthesekreislauf vor den Ammoniakreaktor (A) zurückführbar ist, sowie einer mit dem Synthesekreiskauf verbundenen Wasserstoffquelle (W), die einen Elektrolyseur (E) umfasst, mit dem durch elektrochemische Zerlegung von Wasser (7) eine wasserhaltige Wasserstofffraktion (Elektrolysewasserstoff) (9) zum Erhalt des Make-up-Wasserstoffs (16) bereitstellbar ist, **dadurch gekennzeichnet, dass** sie einen mit der Wasserstoffquelle (W) und dem Synthesekreislauf verbundenen Kontaktapparat (B, H) umfasst, dem Elektrolysewasserstoff (9) oder eine aus dem Elektrolysewasserstoff (9) durch Reduzierung von freiem Sauerstoff (O) aus Elektrolysewasserstoff (9) erhältliche Wasserstofffraktion (10) zuführbar ist, um zur Abtrennung von Wasser mit zumindest einem Teil (15) der ammoniakreichen Flüssigphase (5) in Kontakt gebracht zu werden und den wasserfreien Make-up-Wasserstoff (16) zu erhalten.

6. Vorrichtung nach Anspruch 5, **dadurch gekennzeichnet, dass** der Kontaktapparat als Blasensäule (B) oder als Waschkolonne (H) ausgeführt ist.

7. Vorrichtung nach einem der Ansprüche 5 oder 6, **dadurch gekennzeichnet, dass** die Wasserstoffquelle (W) eine Sauerstoffreduzierung (O) aufweist, mit der der Gehalt an freiem Sauerstoff im Elektrolysewasserstoff (9) bis unter 5ppmv reduziert werden kann.

8. Vorrichtung nach einem der Ansprüche 5 bis 7, **dadurch gekennzeichnet, dass** der Elektrolyseur (E) als PEM-Elektrolyseur oder als Alkalischer Elektrolyseur oder als Festoxid-Elektrolyseur ausgeführt ist.

9. Vorrichtung nach einem der Ansprüche 5 bis 8, **dadurch gekennzeichnet, dass** sie eine Mischeinrichtung aufweist, mit der dem wasserstoffreichen Make-up-Gas (16) Stickstoff (12) zugemischt werden kann.
